# EUROPÄISCHE PATENTSCHRIFT

(11) **EP 2 487 049 B1**
(45) Veröffentlichungstag und Bekanntmachung des Hinweises auf die Patenterteilung: **27.05.2015**
(21) Anmeldenummer: 11193909.6
(22) Anmeldetag: 16.12.2011
(51) Int. Cl.: B60C 11/04, B60C 11/13

(54) **Fahrzeugluftreifen**
Pneumatic tyres for a vehicle
Pneus de véhicule

(30) Priorität: 11.02.2011 DE 102011000671
(43) Veröffentlichungstag der Anmeldung: 15.08.2012
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 0 718 124
- EP-A1- 2 210 749
- DE-A1- 19 548 733

## Beschreibung

Die Erfindung betrifft einen Fahrzeugluftreifen - insbesondere für Personenkraftwagen - mit Laufstreifenprofil mit radial erhabenen über den Umfang des Fahrzeugluftreifens erstreckten Profilbändern - wie z.B. Profilblockreihen oder Umfangsrippen - die in axialer Richtung jeweils durch eine über den Umfang des Fahrzeugluftreifens erstreckte Umfangsrille voneinander beabstandet sind, bei dem wenigstens ein Profilband der in axialer Richtung A innerhalb der Bodenaufstandsbreite gemessenen Breite b in Umfangsrichtung U des Fahrzeugluftreifens hintereinander angeordnete, radial erhabene und jeweils durch eine Querrille von einander beabstandete Profilbandelementen ausgebildet ist, bei dem die Querrille zumindest in eine Umfangsrille mündet und wobei in der Querrille wenigstens ein in radialer Richtung R bis in einen radialen Abstand h₂ > 0 von der die Bodenkontaktoberfläche bildenden Mantelfläche des Laufstreifenprofiles erstreckter aus dem Rillengrund der Querrille erhabener Steg ausgebildet ist, der sich in Umfangsrichtung U erstreckt und die beiden durch die Querrille von einander beabstandeten Profilbandelemente mit einander verbindet, wobei der Steg in radialer Richtung R nach außen durch eine nach radial außen gerichteten Stegfläche und in beide Erstreckungsrichtungen der Querrille jeweils mit einer in radialer Richtung R aus dem Rillengrund bis zu dieser Stegfläche und in Umfangsrichtung von Profilbandelement zu Profilbandelement erstreckten Stegflanke begrenzt ist.

Derartige Fahrzeugluftreifen sind bekannt. Dabei ermöglichen die Querrillen die Aufnahme und die Ableitung von Wasser beim Durchlaufen des Reifenlatsches auf nassen Straßenoberflächen. Die durch die Querrillen gebildeten in Umfangsrichtung gerichteten Profilblockelementflanken ermöglichen Griffkanten zur Verbesserung der Traktion und Bremseigenschaften. Die Querrillen reduzieren jedoch die Umfangssteifigkeit und die Quersteifigkeit der Profilblockreihen, wodurch die Profilblockelemente sich aufgrund ihrer gerade beim Neureifen mit großer Profiltiefe erhöhten Flexibilität mehr oder weniger stark verbiegen und verwinden können, wodurch die Kraftübertragung sowohl auf trockener als auch auf nasser Straße beeinträchtigt wird.

Es ist bekannt, zur Erhöhung der Umfangssteifigkeit der Profilblockelemente zwei in Umfangsrichtung hintereinander angeordnete Profilblockelemente durch einen aus dem Rillengrund radial erhabenen Steg miteinander zu verbinden. Die Stege sind dabei üblicherweise im Bereich der Querrillenmitte angeordnet. Diese Versteifung bewirkt eine erhöhte Umfangssteifigkeit der Profilblockreihe, wodurch die durch die Querrille gebildeten Profilblockelementflanken einen verbesserten Griff zur Übertragung von Kräften in Umfangsrichtung ermöglichen. Hierdurch können die Nassgriffeigenschaften verbessert werden.

Allerdings sind die Profilblockelemente durch den Steg fast punktförmig miteinander verbunden und über die breiten axialen Erstreckungsbereiche außerhalb des Steges bis zu den die Profilblockreihen jeweils begrenzenden Umfangsrillen unversteift und flexibel. Hierdurch sind die Profilblockelemente an beiden axialen Erstreckungsenden auch bei diesen Ausbildungen weiterhin aufgrund der hohen Flexibilität verbiegbar und sowohl um radiale als auch um in Umfangsrichtung gerichtete Achsen verwindbar. Dies bewirkt, dass beim Bremsen auf trockener Straße die Profilblockelemente in weiten Erstreckungsbereichen axial außerhalb des Steges aufgrund von auftretenden Verwölbungen der Straßenkontaktoberfläche des Profilblockelementes hinsichtlich des für Trockenbremseigenschaften wichtigen großflächigen gleichmäßigen Bodenkontaktes unerwünscht eingeschränkt werden kann. Darüber hinaus können auch die zu den benachbarten Umfangsrillen ausgebildeten Profilblockelementflanken weiterhin unerwünscht stark verformt werden, so dass die zum Handling gewünschte zwischen der in der Umfangsrille gebildeten Profilblockelementflanke und der radial äußeren das Profilblockelement begrenzende Oberfläche gebildete Kante in ihrer Griffwirkung beeinträchtigt werden kann, wodurch die Handlingseigenschaften reduziert werden können. Darüber hinaus ist die zwischen Querrille und Umfangsrille gebildete Ecke des Profilblockelementes durch Torsions- und Biegebewegung in ihrer Griffwirkung beeinträchtigt, wodurch die für gute Handlingeigenschaften besonders wichtige zwischen Umfangsrille und Querrille eingeschlossene Ecke ihre Griffwirkung nicht vollständig entfaltet. Das Trockenhandling wird hierdurch weiter zusätzlich beeinträchtigt.

Aus der EP 0 654 366 B1 ist es bekannt, in den Querrillen einer Profilblockreihe jeweils einen Steg auszubilden, der an einem axialen Erstreckungsende der Querrille ausgebildet ist. Die Profilblockelemente sind hierdurch praktisch über die gesamte Querrille hinweg nicht gestützt und sind hierdurch noch anfälliger für Verwindungen und Verbiegungen. Dabei ist aus der EP 0 654 366 B1 eine Ausführung bekannt, bei der die Stege jeweils an der gleichen axialen Position der Querrillen einer Profilblockreihe ausgebildet sind. Die Profilblockelemente sind in diesem Fall über ihre gesamte axiale Erstreckung, ausgehend von der axialen Position des Steges wie mit einem Hebelarm, der der gesamten Erstreckungslänge der Querrille entspricht, um eine radiale Achse durch den Befestigungspunkt am Steg tordierbar und nahezu über ihre gesamte axiale Erstreckung auch um Achsen parallel zur Reifenachse verwindbar. Die hierdurch bedingten gegenüber der Ausbildung der Stege in mittlerer Position größere Verwindbarkeit und Verbiegbarkeit der Profilblockelemente können zu erhöhter Beschränkung der Handling- und Trockenbremseigenschaften führen. Aus der EP 0 654 366 B1 ist darüber hinaus eine Ausbildung bekannt, bei der über den Umfang des Reifens in alternierender Reihenfolge ein Steg in einer ersten Querrille auf der linken Seite der Querrille und der Steg in der nächsten Querrille auf der rechten Seite der Querrille angeordnet ist. Auch hier ist eine große Verwindbarkeit der Profilblockelemente um radiale und um axiale Achsen sowie um Umfangsachsen parallel zur Umfangsrichtung gegeben, wodurch sowohl TrockenBremseigenschaften als auch Handling-Eigenschaften unerwünscht beeinträchtigt werden können. Darüber hinaus ist bei dieser Ausbildung zusätzlich die Umfangssteifigkeit durch die alternierende Positionierung reduziert.

Damit ein Profilband zur Erzielung eines optimierten Footprints flexibel genug zur Anpassung an den Untergrund ist, ist es wünschenswert im Profilband beiderseits mit kurzem Abstand zur angrenzenden Umfangsrille jeweils einen schmalen Steg auszubilden. Hierdurch können sehr hohe Umfangskräfte ohne Verwindung der Profilblöcke übertragen werden. Bei großen Querkräften bei sehr flexiblen dünnen Stegen die Möglichkeit der Rissbildung im Übergang zwischen Profilblockelement und Steg, was sich dann negativ auf die Umfangssteifigkeit auswirken kann.

**Aus der gattungsgemäßen** DE 195 48 733 A1 **ist ein Reifen bekannt, bei dem in Umfangsrichtung hintereinander angeordnete Profilblockelemente durch Stege verbunden sind, deren Flanken einen gekrümmten Verlauf aufweisen.**

**Aus der** EP 2 210 749 A1 **ist ein Fahrzeugluftreifen gemäß den Merkmalen des Oberbegriffs von Anspruch 1 bekannt.**

Der Erfindung liegt die Aufgabe zugrunde, in einfacher Weise ein Profilband unter Nutzung von Stegen mit einer hohen Lateralsteifigkeit zu ermöglichen, bei dem auch bei schmalen Stegen und auch bei hohen zu übertragenden Querkräften hohe Quer- und Umfangsteifigkeit ermöglicht werden.

Die Aufgabe wird erfindungsgemäß durch Ausbildung eines Fahrzeugluftreifens - insbesondere für Personenkraftwagen - mit Laufstreifenprofil mit radial erhabenen über den Umfang des Fahrzeugluftreifens erstreckten Profilbändem - wie z.B. Profilblockreihen oder Umfangsrippen - die in axialer Richtung jeweils durch eine über den Umfang des Fahrzeugluftreifens erstreckte Umfangsrille voneinander beabstandet sind, bei dem wenigstens ein Profilband der in axialer Richtung A innerhalb der Bodenaufstandsbreite gemessenen Breite b in Umfangsrichtung U des Fahrzeugluftreifens hintereinander angeordnete, radial erhabene und jeweils durch eine Querrille von einander beabstandete Profilbandelementen ausgebildet ist, bei dem die Querrille zumindest in eine Umfangsrille mündet und wobei in der Querrille wenigstens ein in radialer Richtung R bis in einen radialen Abstand h₂ > 0 von der die Bodenkontaktoberfläche bildenden Mantelfläche des Laufstreifenprofiles erstreckter aus dem Rillengrund der Querrille erhabener Steg ausgebildet ist, der sich in Umfangsrichtung U erstreckt und die beiden durch die Querrille von einander beabstandeten Profilbandelemente mit einander verbindet, wobei der Steg in radialer Richtung R nach außen durch eine nach radial außen gerichteten Stegfläche und in beide Erstreckungsrichtungen der Querrille jeweils mit einer in radialer Richtung R aus dem Rillengrund bis zu dieser Stegfläche und in Umfangsrichtung von Profilbandelement zu Profilbandelement erstreckten Stegflanke begrenzt ist, bei dem die beiden Stegflanken in radialer Projektion auf den Steg mit einem längs ihrer Erstreckung von Profilbandelement zu Profilbandelement ausgebildetem Konturverlauf mit zu der vom Steg wegweisenden Seite der jeweiligen Flanke hin ausgebildeter Krümmung und mit jeweils tangentialem Übergang zu der zur Querrille hin gerichteten, die Rillenwand bildenden Flanke des jeweiligen Profilbandelementes ausgebildet ist, **gemäß den Merkmalen von Anspruch 1 gelöst, bei dem die beiden Stegflanken in ihren senkrecht zur radialen ausgebildeten Schnittebenen jeweils mit einem längs ihrer Erstreckung von Profilbandelement zu Profilbandelement ausgebildetem Konturverlauf mit zu der vom Steg wegweisenden Seite der jeweiligen Flanke hin ausgebildeter Krümmung und mit jeweils tangentialem Übergang zu der zur Querrille hin gerichteten, die Rillenwand bildenden Flanke des jeweiligen Profilbandelementes ausgebildet sind, wobei die Krümmung des Konturverlaufs in den einzelnen Schnittebenen längs der radialen Erstreckung von der Stegfläche nach radial innen stetig zunimmt.**

Durch diese Ausbildung wird ein krümmungsstetiger, kerbspannungsfreier Übergang zwischen Steg und Flanke des jeweiligen Profilbandelementes bei sehr vergleichmäßigten Querschnittsveränderungen über die gesamte Längserstreckung des Steges von Profilbandelement zu Profilbandelement ohne Unstetigkeiten des Querschnittsverlaufes gesichert. Hierdurch können die Stege mit hohem Versteifungseffekt für das Profilband ausgebildet werden unter Vermeidung von Rissbildungsgefahren durch Kerbspannungen. Dies wird auch bei Stegen mit sehr kleiner minimaler Stegbreite ermöglicht, wodurch auch Stege zur Erzielung optimaler Anpassung an den Footprint mit hoher Versteifungswirkung zur Versteifung des Profilbandes in Umfangs- und Quernchtung und unter Vermeidung von Rissbildungen umgesetzt werden können. **Die Ausbildung begünstigt eine einfache Ein- und Ausformung des Reifens bei hohen erzielbaren Abstützeffekten.**

Besonders vorteilhaft zur Sicherstellung einer ausreichenden Stabilisierung und Verteifung ist die Ausbildung eines Fahrzeugluftreifens gemäß den Merkmalen von Anspruch **2,** wobei jede der beiden Stegflanken zumindest im radial äußeren Erstreckungsbereich der Erstreckungshöhe hₐ jeweils eine Mantelsegmentfläche eines Kegelstumpfs bilden, dessen Kegelachse auf der vom Steg wegweisenden Seite der jeweiligen Stegflanke angeordnet und mit einer Haupterstreckungsrichtungskomponente in radialer Richtung R ausgerichtet ist, wobei die Erstreckungshöhe hₐ in Bezug auf die in radialer Richtung R gemessene Gesamterstreckungshöhe h des Steges insbesondere mit hₐ ≥ 0,8h ausgebildet ist.

Besonders vorteilhaft ist die Ausbildung eines Fahrzeugluftreifens gemäß den Merkmalen von Anspruch **3,** wobei jede der beiden Stegflanken im radial inneren Erstreckungsbereich der Erstreckungshöhe hᵢ mit hᵢ ≤ 0,2h zusätzlich mit einem abgerundeten Übergang zum Rillengrund ausgebildet ist. Hierdurch können Spannungsspitzen im Übergang zum Rillengrund besonders wirkungsvoll vermieden und eine hohe Wasseraufnahmekapazität dennoch gewährleistet werden.

Besonders vorteilhaft zur Erzielung einer optimalen Steifigkeitseinstellung ist die Ausbildung eines Fahrzeugluftreifens gemäß den Merkmalen von Anspruch **4,** wobei die Steghöhe h mit 0,5P_{T}≤h≤ (P_{T} -1mm) ausgebildet ist, wobei P_{T} die maximale in der Querrille in radialer Richtung R gemessene Profiltiefe angibt.

Besonders vorteilhaft zur Erzielung optimaler Steifigkeitsverhältnisse bei ausreichender Flexibilität ist die Ausbildung eines Fahrzeugluftreifens gemäß den Merkmalen von Anspruch **5,** wobei der Steg an seiner schmalsten Stelle mit einer Breite dₘᵢₙ mit 1 mm≤ dₘᵢₙ ≤ 3mm ausgebildet ist.

Besonders vorteilhaft ist die Ausbildung eines Fahrzeugluftreifens gemäß den Merkmalen von Anspruch **6,** wobei die Querrille mit einer maximalen Breite b mit 0,8mm< b ≤ 6mm ausgebildet ist.

Besonders vorteilhaft ist die Ausbildung eines Fahrzeugluftreifens gemäß den Merkmalen von Anspruch **7,** wobei der Steg mit einem Abstand a zur nächstgelegenen Umfangsrille ausgebildet ist mit 0mm≤ a ≤ 2mm ausgebildet ist. Dies ermöglicht eine zusätzliche Stabilisierung der zwischen Querrille und Umfangsrille gebildeten Profilbandelementecken.

Besonders vorteilhaft ist die Ausbildung eines Fahrzeugluftreifens gemäß den Merkmalen von Anspruch **8,** wobei die Querrille eine zwei Profilblockelemente einer Profilblockreihe trennende Querrille ist, in welcher in den innerhalb der Bodenaufstandsbreite des Reifens ausgebildeten Bereich ihrer beiden Erstreckungsenden ein derartiger die beiden Profilblockelemente verbindender Steg ausgebildet ist.

Besonders vorteilhaft ist die Ausbildung eines Fahrzeugluftreifens gemäß den Merkmalen von Anspruch **9,** wobei die Querrille im Erstreckungsbereich zwischen den beiden Stegen mit geringerer Tiefe ausgebildet ist als außerhalb. Dies ermöglicht eine sichere Einformung beim Heizen, besonders auch bei schmalen Querrillen.

Die Erfindung ist im Folgenden an Hand der in den Figuren 1 bis 5 dargestellten Ausführungsbeispiele am Beispiel eines PKW-Sommerreifens radialer Bauart näher erläutert. Darin zeigen
- Fig. 1: einen Umfangsabschnitt eines Laufstreifenprofils eines Fahrzeugluftreifens für Personenkraftwagen mit Sommerreifenprofil,
- Fig. 2: den Querschnitt durch eine Profilblockelementreihe von Fig.1 gemäß Schnittdarstellung II-II von Fig.1,
- Fig. 3: den Querschnitt durch eine Profilblockelementreihe von Fig.1 gemäß Schnittdarstellung III-III von Fig.1,
- Fig. 4: Draufsicht (Blick in radialer Richtung) auf Profilblockelementreihe von Fig. 1 gemäß Blickrichtung IV-IV von Fig.2 und
- Fig. 5: den Querschnitt durch eine Profilblockelementreihe von Fig.1 gemäß Schnittdarstellung V-V von Fig.2.

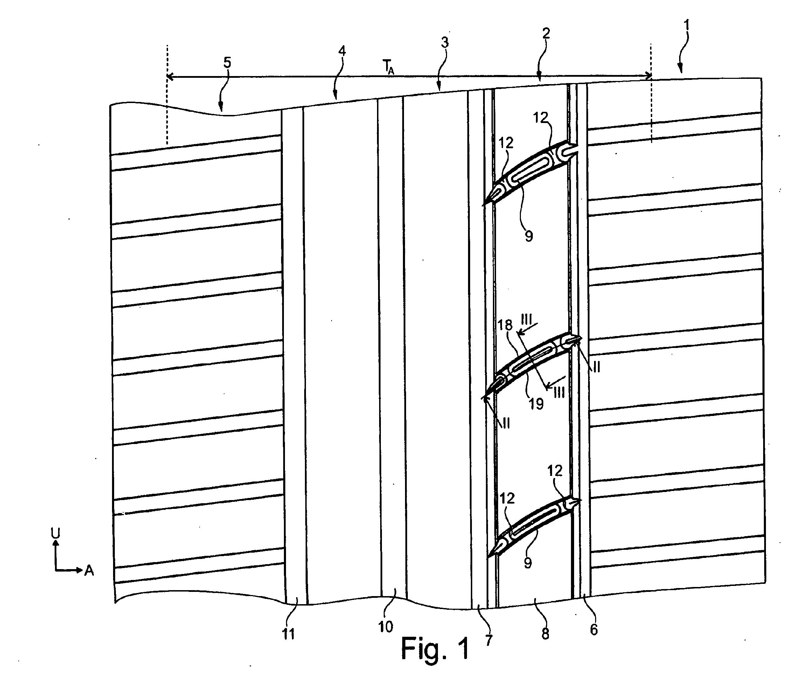

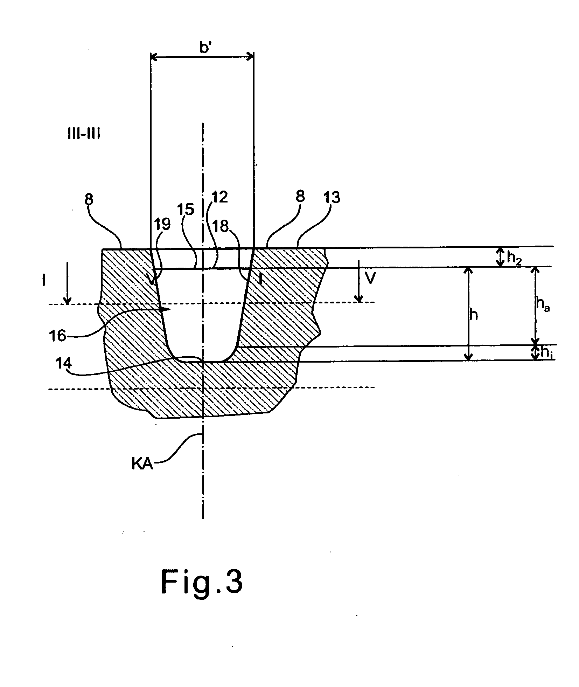

Die Fig.1 bis Fig.5 zeigen ein Laufstreifenprofil eines Fahrzeugluftreifes für Personenkraftwagen in radialer Bauart. Das Laufstreifenprofil ist ein Sommerreifenprofil.

Das Laufstreifenprofil ist - wie in Fig. 1 dargestellt - in axialer Richtung A des Fahrzeugluftreifens von rechts nach links aus einer über den gesamten Umfang des Fahrzeugluftreifens erstreckten und in Umfangsrichtung U ausgerichteten Profilblockreihe 1, einer über den gesamten Umfang des Fahrzeugluftreifens erstreckten und in Umfangsrichtung U ausgerichteten Profilblockreihe 2, einer über den gesamten Umfang des Fahrzeugluftreifens erstreckten und in Umfangsrichtung U ausgerichteten Profilrippe 3, einer über den gesamten Umfang des Fahrzeugluftreifens erstreckten und in Umfangsrichtung U ausgerichteten Profilrippe 4 und aus einer über den gesamten Umfang des Fahrzeugluftreifens erstreckten und in Umfangsrichtung U ausgerichteten Profilblockreihe 5 bekannter Art ausgebildet. Die Profilblockreihen 1 und 5 sind als Schulterprofilblockreihen ausgebildet. Die Bodenaufstandsbreite T_{A} des Fahrzeugluftreifens erstreckt sich aus dem axialen Erstreckungsbereich der rechten Schulterprofilblockreihe 1 bis zum axialen Erstreckungsbereich der linken Schulterprofilblockreihe 5. Die Profilblockreihe 2, die Profilrippe 3 und die Profilrippe 4 sind zwischen den beiden Schulterprofilblockreihen 1 und 5 axial nebeneinander angeordnet ausgebildet. Die Profilblockreihe 2 ist von der Schulterprofilblockreihe 1 durch eine über den gesamten Umfang des Fahrzeugluftreifens erstreckte und in Umfangsrichtung U ausgerichtete Umfangsrille 6 axial beabstandet. Die Profilblockreihe 2 und die Profilrippe 3 sind in axialer Richtung A durch eine über den gesamten Umfang des Fahrzeugluftreifens erstreckte und in Umfangsrichtung U ausgerichtete Umfangsrille 7 in bekannter Weise voneinander beabstandet. Die Profilrippe 3 und die Profilrippe 4 sind in axialer Richtung A des Fahrzeugluftreifens in bekannter Weise durch eine über den gesamten Umfang des Fahrzeugluftreifens erstreckte und in Umfangsrichtung U ausgerichtete Umfangsrille 10 voneinander beabstandet. Die Profilrippe 4 und die linke Schulterprofilblockreihe 5 sind in bekannter Weise durch ein über den gesamten Umfang des Fahrzeugluftreifens erstreckte und in Umfangsrichtung U ausgerichtete Umfangsrille 11 voneinander beabstandet.

Die Profilblockreihe 2 ist in bekannter Weise aus in Umfangsrichtung U des Fahrzeugluftreifens hintereinander angeordneten und jeweils durch Querrillen 9 voneinander beabstandeten Profilblockelementen 8 ausgebildet. Die Querrillen 9 erstrecken sich in axialer Richtung A ausgehend von der Umfangsrille 6 durch die gesamte Profilblockreihe 2 hindurch bis in die Umfangsrille 7, in welche sie münden. Die Querrille 9 ist in radialer Richtung R nach innen hin jeweils durch einen Rillengrund 14 und in Umfangsrichtung U zu dem einen durch die jeweilige Querrille 9 begrenzten Profilblockelement 8 hin durch die zur Querrille 9 hinweisende Flanke 18 dieses Profilblockelementes 8, welche die eine Rillenwand der Querrille bildet, und zum anderen durch die Querrille 9 begrenzten Profilblockelement 8 hin durch die zur Querrille 9 hinweisende Flanke 19 dieses Profilblockelementes 8, welche die andere Rillenwand der Querrille 9 bildet, begrenzt. Die Profilblockelemente 8 werden in radialer Richtung R nach außen durch eine die Straßenkontaktoberfläche bildende radial äußere Oberfläche 13 begrenzt. Die Flanken 18 bzw. 19 erstrecken sich in radialer Richtung R ausgehend vom Rillengrund 14 bis zur radial äußeren Oberfläche 13.

In beiden axial äußeren Erstreckungsenden der Querrille 9 ist im in axialer Richtung A gemessenen Abstand a von der jeweils nächstliegenden Umfangsrille 6 bzw. 7 jeweils ein Steg 12 ausgebildet, welcher sich quer zur Haupterstreckungsrichtung der Querrille 9 ausgehend von der Flanke 19 des einen die Querrille 9 begrenzenden Profilblockelementes 8 bis zur Flanke 18 des anderen die Querrille 9 begrenzenden Profilblockelementes 8 hindurch erstreckt und die beiden Flanken 18 und 19 miteinander verbindet. Der Steg 12 erstreckt sich ausgehend vom Rillengrund 14 in radialer Richtung R bis in eine in radialer Richtung R gemessene Höhe h nach außen und ist nach radial außen von einer ebenen radial äußeren Oberfläche 15 begrenzt, welche sich zwischen der Flanke 18 und der Flanke 19 erstreckt. Die radial äußere Oberfläche 15 des Steges ist in radialer Richtung R gemessenen Abstand h₂ von der die Straßenkontaktoberfläche bildenden radial äußeren Oberfläche 13 der angrenzenden Profilblockelemente 8 ausgebildet, mit h₂ > 0. Jeder Steg 12 ist jeweils auf seiner einen Seite, welche in Erstreckungsrichtung der Querrille 9 die vom anderen Steg 12 weg- und zur benachbarten Umfangsrille 7 bzw. 6 hinweisende Seite bildet, von einer Flanke 17 und auf seiner anderen Seite, welche in Erstreckungsrichtung der Querrille 9 die zum anderen Steg 12 hingerichtete Seite bildet, durch eine Flanke 16 begrenzt. Die Flanken 17 und 16 erstrecken sich jeweils in radialer Richtung R ausgehend vom Rillengrund 14 bis zur radial äußeren Oberfläche 15 des jeweiligen Steges 12.

Die Flanken 16 und 17 sind jeweils mit einer in radialer Richtung gemessenen Erstreckungshöhe h mit einem radial äußeren Erstreckungsbereich der Höhe hₐ und mit einem in radialer Richtung nach innen angrenzenden radial inneren Erstreckungsbereich der Höhe hᵢ, welche sich bis zum Rillengrund 14 erstreckt. Für die jeweilige Höhe h einer Flanke 16 bzw. 17 gilt jeweils h = (hₐ + hᵢ) und 0,5P_{T} ≤ h ≤ (P_{T} - 1mm), wobei P_{T} die maximale in der Querrille 9 in radialer Richtung R gemessene Profiltiefe angibt. Der äußere Erstreckungsbereich hₐ ist mit hₐ ≥ 0,8 h der jeweiligen Stegflanke 16 bzw. 17 und der innere Erstreckungsbereich hᵢ mit hᵢ ≤ 0,2h der jeweiligen Stegflanke 16 bzw. 17 ausgebildet.

Die Querrille 9 ist jeweils mit einer Breite b - gemessen in der radial äußeren Oberfläche 13 - ausgebildet mit 0,8mm ≤b ≤6mm.

Wie in den Figuren 1, 4 und 5 zu erkennen ist, ist die Stegflanke 17 in ihrem radial äußeren Erstreckungsbereich hₐ des Steges 12 als Mantelsegmentfläche eines Kegelstumpfes ausgebildet mit der Kegelachse K_{A}, die sich auf der vom Steg 12 wegweisenden Seite der Stegfläche 17 in radialer Richtung R ausgerichtet erstreckt. Die Spitze des dem Kegelstumpf zuzuordnenden Kegels ist in radialer Richtung R des Fahrzeugluftreifens innerhalb des Reifens und somit unterhalb des Rillengrundes 14 angeordnet. Der Kegel ist mit einem Kegelöffnungswinkel α mit α ≤ 15° - beispielsweise mit α =10° - ausgebildet. In der radial äußeren Oberfläche 15 des Stegs 12 ist der Kegelstumpf mit seinem maximalen Kegelmantelradius Rₐ ausgebildet. Der Kegelmantelradius Radius Rᵢ nimmt ausgehend von seinem maximalen Wert Rₐ in der radial äußeren Oberfläche 15 des Stegs über den gesamten radial äußeren Erstreckungsbereich hₐ der Stegflanke 17 nach radial innen hin kontinuierlich ab und somit die Krümmung kontinuierlich zu.

Ebenso ist die Stegflanke 16 in ihrem radial äußeren Erstreckungsbereich hₐ des Steges 12 als Mantelsegmentfläche eines anderen Kegelstumpfes ausgebildet mit einer Kegelachse K_{A}, die sich in der vom Steg 12 wegweisenden Seite der Stegfläche 16 und somit auf der zum anderen Steg 16 der Querrille 9 hinweisenden Seite in radialer Richtung R des Fahrzeugluftreifens ausgerichtet erstreckt. Die Spitze des diesem Kegelstumpf zuzuordnenden Kegels ist in radialer Richtung R des Fahrzeugluftreifens innerhalb des Reifens und somit in einer radialen Position unterhalb des Rillengrundes 14 angeordnet. Der Kegel ist mit einem Kegelöffnungswinkel β mit ß15° - beispielsweise mit β =10° - ausgebildet. In der radial äußeren Oberfläche 15 des Stegs 12 ist der Kegelstumpf mit seinem maximalen Kegelmantelradius Rₐ ausgebildet. Der Kegelmantelradius Radius Rᵢ nimmt ausgehend von seinem maximalen Wert Rₐ in der radial äußeren Oberfläche 15 des Stegs über den gesamten radial äußeren Erstreckungsbereich hₐ der Stegflanke 16 nach radial innen hin kontinuierlich ab und somit die Krümmung kontinuierlich zu.

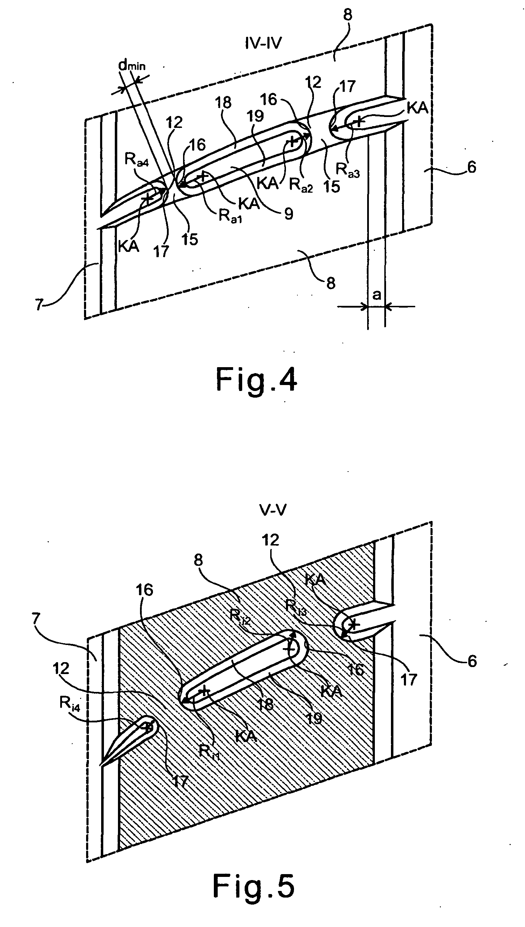

Die Kegelmantelfläche des die Stegflanke 17 bildenden Kegelstumpfes und die Kegelmantelfläche des die Stegflanke 16 bildenden Kegelstumpfes gehen jeweils längs ihrer gesamten radiale Erstreckung in allen ihren senkrecht zur jeweiligen radialen Position in der Querrille 9 ausgebildeten Schnittebenen in ihrem Schnittkonturverlauf tangential in die Flanke 18 des einen angrenzenden Profilblockelementes 8 und tangential in die Flanke 19 des anderen Profilblockelementes 8 über. Die Projektion in radialer Richtung R von außen nach innen auf den Steg 12 bildet - wie in Fig. 4 zu erkennen ist - jeweils eine kreissegmentförmige Konturlinie der Stegflanke 17 in der radial äußeren Oberfläche 15 und auch jeweils eine kreissegmentförmige Konturlinie der Stegflanke 16 in der radial äußeren Oberfläche 15, die jeweils tangential in die Profilblockelementflanke 18 und 19 der angrenzenden Profilblockelemente 8 übergehen.

Die jeweilige Stegflanke 16 und 17gehen auch im radial inneren Erstreckungsbereich der Höhe hᵢ jeweils längs ihrer gesamten radiale Erstreckung in allen ihren senkrecht zur jeweiligen radialen Position in der Querrille 9 ausgebildeten Schnittebenen in ihrem Schnittkonturverlauf tangential in die Flanke 18 des einen angrenzenden Profilblockelementes 8 und tangential in die Flanke 19 des anderen Profilblockelementes 8 über. Zusätzlich ist im radial inneren Erstreckungsbereich der Höhe hᵢ die jeweilige Stegflanke 16 und 17 in den aus Haupterstreckungsrichtung der Querrille 9 und radialer Richtung R aufgespannten Schnittebenen mit zum Rillengrund 14 hin abgerundeter Schnittkontur ausgebildet.

Der Steg 12 ist in der radial äußeren Oberfläche 15 an seiner schmalsten Stelle mit einer Breite dₘᵢₙ mit 1mm ≤ dₘᵢₙ ≤ 3mm ausgebildet, welche den Abstand der Flanke 16 von der Flanke 17 in der Oberfläche 15 angibt. Der Abstand dₘᵢₙ ist beispielsweise mit dₘᵢₙ = 2mm ausgebildet.

Der Abstand a bemisst sich aus dem kürzesten innerhalb der Erstreckungshöhe hₐ der Stegflanke 17 in Schnittebenen senkrecht zur radialen Richtung R in axialer Richtung A gemessenen Abstand der vom Kegelstumpf der Flanke 17 mit der jeweiligen Profilblockelementflanke 18 bzw. 19 gebildeten Tangentenlinie von der jeweils nächstgelegenen Umfangsrille 6 bzw. 7. Der Abstand a des Steges 12 zur nächstgelegenen Umfangsrille 6 bzw. 7 ist mit 0mm ≤ a ≤ 2mm ausgebildet. Beispielsweise ist der Abstand a mit a = 1mm ausgebildet.

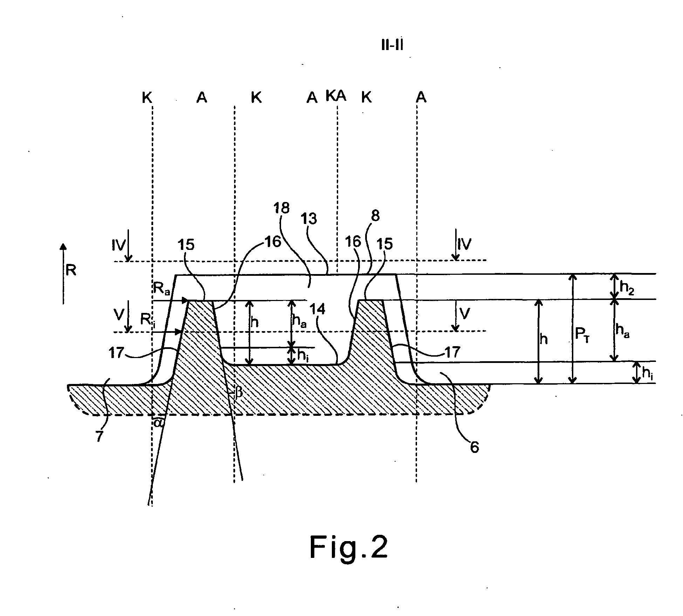

In Fig. 2 ist in einem Ausführungsbeispiel die zwischen den beiden Stegen 12 der Querrille 9 ausgebildete Rillentiefe kleiner ausgebildet als die mit maximaler Profiltiefe P_{T} in dem zwischen der Umfangsrille 7 und dem zu dieser Umfangsrille 7 nächstgelegenen Steg 12 ausgebildete Rillentiefe der Querrille 9 und auch kleiner als die mit maximaler Profiltiefe P_{T} in dem zwischen der Umfangsrille 6 und dem zu dieser Umfangsrille 6 nächstgelegenen Steg 12 ausgebildete Rillentiefe der Querrille 9. In diesem Ausführungsbeispiel ist die Erstreckungshöhe h der Stegflanke 16 kleiner ausgebildet als die Erstreckungshöhe h der Stegflanke 17.

In einem anderen nicht dargestellten Ausführungsbeispiel ist die Rillentiefe zwischen den beiden benachbarten Stegen 12 der Querrille 9 gleich groß ausgebildet, wie die Rillentiefe zwischen dem jeweiligen Steg 12 und der angrenzenden Umfangsrille 6 bzw.7. Bei diesem Ausführungsbeispiel ist die Erstreckungshöhe h der Stegflanke 16 gleich groß ausgebildet wie die Erstreckungshöhe h der Stegflanke 17.

### Bezugszeichenliste

### (Teil der Beschreibung)

- 1: Profilblockreihe
- 2: Profilblockreihe
- 3: Profilrippe
- 4: Profilrippe
- 5: Profilblockreihe
- 6: Umfangsrille
- 7: Umfangsrille
- 8: Profilblockelement
- 9: Querrille
- 10: Umfangsrille
- 11: Umfangsrille
- 12: Steg
- 13: Radial äußere Oberfläche
- 14: Rillengrund
- 15: Radial äußere Stegoberfläche
- 16: Stegflanke
- 17: Stegflanke
- 18: Flanke
- 19: Flanke

## Patentansprüche

1. Fahrzeugluftreifen - insbesondere für Personenkraftwagen - mit Laufstreifenprofil mit radial erhabenen übenden Umfang des Fahrzeugluftreifens erstreckten Profilbändern (1,2,3,4,5) - wie z.B. Profilblockreihen oder Umfangsrippen - die in axialer Richtung A jeweils durch eine über den Umfang des Fahrzeugluftreifens erstreckte Umfangsrille (6,7,10,11) voneinander beabstandet sind, bei dem wenigstens ein Profilband (2) der in axialer Richtung A innerhalb der Bodenaufstandsbreite T_{A} gemessenen Breite b in Umfangsrichtung U des Fahrzeugluftreifens hintereinander angeordnete, radial erhabene und jeweils durch eine Querrille (9) von einander beabstandete Profilbandelementen (8) ausgebildet ist, bei dem die Querrille (9) zumindest in eine Umfangsrille (6,7) mündet und wobei in der Querrille (9) wenigstens ein in radialer Richtung R bis in einen radialen Abstand h₂ > 0 von der die Bodenkontaktoberfläche (13) bildenden Mantelfläche des Laufstreifenprofiles erstreckter aus dem Rillengrund (14) der Querrille (9) erhabener Steg (12) ausgebildet ist, der sich in Umfangsrichtung U erstreckt und die beiden durch die Querrille (9) von einander beabstandeten Profilbandelemente (8) mit einander verbindet, wobei der Steg (12) in radialer Richtung R nach außen durch eine nach radial außen gerichteten Stegfläche (15) und in beide Erstreckungsrichtungen der Querrille (9) jeweils mit einer in radialer Richtung R aus dem Rillengrund (14) bis zu dieser Stegfläche (15) und in Umfangsrichtung U von Profilbaridelement (8) zu Profilbandelement (8) erstreckten Stegflanke (16,17) begrenzt ist und wobei die beiden Stegflanken (16,17) in radialer Projektion auf den Steg (12) mit einem längs ihrer Erstreckung von Profilbandelement (8) zu Profilbandelement (8) ausgebildetem Konturverlauf mit zu der vom Steg (12) wegweisenden Seite der jeweiligen Flanke (16,17) hin ausgebildeter Krümmung und mit jeweils tangentialem Übergang zu der zur Querrille (9) hin gerichteten, die Rillenwand bildenden Flanke (18,19) des jeweiligen Profilbandelementes (8) ausgebildet sind,
**dadurch gekennzeichnet,**
**dass die beiden Stegflanken (16,17) in ihren senkrecht zur radialen Richtung R ausgebildeten Schnittebenen jeweils mit einem längs ihrer Erstreckung von Profilbandelement (8) zu Profilbandelement (8) ausgebildetem Konturverlauf mit zu der vom Steg (12) wegweisenden Seite der jeweiligen Flanke (16,17) hin ausgebildeter Krümmung und mit jeweils tangentialem Übergang zu der zur Querrille (9) hin gerichteten, die Rillenwand bildenden Flanke (18,19) des jeweiligen Profilbandelementes (8) ausgebildet sind, wobei die Krümmung des Konturverlaufs in den einzelnen Schnittebenen längs der radialen Erstreckung von der Stegfläc6e (16,17) nach radial innen stetig zunimmt.**

2. Fahrzeugluftreifen gemäß den Merkmalen von Anspruch **1,**
wobei jede der beiden Stegflanken (16,17) zumindest im radial äußeren Erstreckungsbereich der Erstreckungshöhe hₐ jeweils eine Mantelsegmentfläche eines Kegelstumpfs bilden, dessen Kegelachse KA auf der vom Steg (12) wegweisenden Seite der jeweiligen Stegflanke (16,17) angeordnet und mit einer Haupterstreckungsrichtungskomponente in radialer Richtung R ausgerichtet ist, wobei die Erstreckungshöhe hₐ in Bezug auf die in radialer Richtung R gemessene Gesamterstreckungshöhe h des Steges (12) insbesondere mit hₐ ≤ 0,8h ausgebildet ist.

3. Fahrzeugluftreifen gemäß den Merkmalen von Anspruch **2,**
wobei jede der beiden Stegflanken (16,17) im radial inneren Erstreckungsbereich der Erstreckungshöhe hᵢ mit hᵢ ≤ 0,2h zusätzlich mit einem abgerundeten Übergang zum Rillengrund (14) ausgebildet ist.

4. Fahrzeugluftreifen gemäß den Merkmalen von einem oder mehreren der vorangegangenen Ansprüche,
wobei die Steghöhe h mit 0,5P_{T} ≤h≤ (P_{T} -1mm) ausgebildet ist, wobei P_{T} die maximale in der Querrille (9) in radialer Richtung R gemessene Profiltiefe angibt.

5. Fahrzeugluftreifen gemäß den Merkmalen von einem oder mehreren der vorangegangenen Ansprüche,
wobei der Steg (12) an seiner schmalsten Stelle mit einer Breite dₘᵢₙ mit 1mm≤ dₘᵢₙ ≤ 3mm ausgebildet ist.

6. Fahrzeugluftreifen gemäß den Merkmalen von einem oder mehreren der vorangegangenen Ansprüche,
wobei die Querrille (9) mit einer maximalen Breite b mit 0,8mm< b ≤ 6mm ausgebildet ist.

7. Fahrzeugluftreifen gemäß den Merkmalen von einem oder mehreren der vorangegangenen Ansprüche,
wobei der Steg (12) mit einem Abstand a zur nächstgelegenen Umfangsrille (6,7) ausgebildet ist mit 0mm≤ a ≤ 2mm ausgebildet ist.

8. Fahrzeugluftreifen gemäß den Merkmalen von einem oder mehreren der vorangegangenen Ansprüche,
wobei die Querrille (9) eine zwei Profilblockelemente (8) einer Profilblockreihe (2) trennende Querrille (9) ist, in welcher in den innerhalb der Bodenaufstandsbreite T_{A} des Reifens ausgebildeten Bereich ihrer beiden Erstreckungsenden ein derartiger die beiden Profilblockelemente (8) verbindender Steg (12) ausgebildet ist.

9. Fahrzeugluftreifen gemäß den Merkmalen von Anspruch **8,**
wobei die Querrille (9) im Erstreckungsbereich zwischen den beiden Stegen (12) mit geringerer Tiefe ausgebildet ist als außerhalb.

## Claims

1. Pneumatic vehicle tyre, in particular for passenger motor vehicles, having a tread profile with radially raised profile strips (1, 2, 3, 4, 5) - such as for example profile block rows or circumferential ribs - which extend over the circumference of the pneumatic vehicle tyre and which are spaced apart from one another in an axial direction A in each case by a circumferential channel (6, 7, 10, 11) extending over the circumference of the pneumatic vehicle tyre, wherein at least one profile strip (2), which has a width b measured in the axial direction A within the ground contact patch width T_{A}, is formed profile strip elements (8) which are arranged one behind the other in the circumferential direction U of the pneumatic vehicle tyre, which are radially raised and which are separated from one another in each case by a transverse channel (9), wherein the transverse channel (9) opens out at least into one circumferential channel (6, 7), and wherein, in the transverse channel (9), there is formed at least one web (12) which extends in a radial direction R to a point at a radial distance h₂ > 0 from the shell surface, which forms the ground contact surface (13), of the tread profile, said at least one web being raised from the channel base (14) of the transverse channel (9) and extending in the circumferential direction U and interconnecting the two profile strip elements (8) which are spaced apart from one another by the transverse channel (9), wherein the web (12) is delimited in the radial direction R to the outside by a radially outwardly directed web surface (15) and in the two directions of extent of the transverse channel (9) in each case by a web flank (16, 17) which extends in the radial direction R from the channel base (14) to said web surface (15) and in the circumferential direction U from profile strip element (8) to profile strip element (8), and wherein the two web flanks (16, 17) are, in a radial projection onto the web (12), formed with a contour profile formed along their extent from profile strip element (8) to profile strip element (8), which contour profile has a curvature formed toward that side of the respective flank (16, 17) which points away from the web (12), and which contour profile has in each case a tangential transition to the flank (18, 19), which is directed toward the transverse channel (9) and which forms the channel wall, of the respective profile strip element (8),
**characterized**
**in that** the two web flanks (16, 17) are, in their section planes perpendicular to the radial direction R, in each case formed with a contour profile formed along their extent from profile strip element (8) to profile strip element (8), which contour profile has a curvature formed toward that side of the respective flank (16, 17) which points away from the web (12), and which contour profile has in each case a tangential transition to the flank (18, 19), which is directed toward the transverse channel (9) and which forms the channel wall, of the respective profile strip element (8), wherein the curvature of the contour profile in the individual section planes along the radial extent increases continuously in the radially inward direction proceeding from the web surface (16, 17).

2. Pneumatic vehicle tyre according to the features of Claim 1, wherein each of the two web flanks (16, 17) forms, at least in the radially outer region of extent of the height of extent hₐ, in each case one shell segment surface of a truncated cone, the cone axis KA of which is arranged on that side of the respective web flank (16, 17) which points away from the web (12), and said cone axis is oriented with a main extent direction component in the radial direction R, wherein the height of extent hₐ is defined, in relation to the total height of extent h of the web (12) measured in the radial direction R, in particular by hₐ ≤ 0.8 h.

3. Pneumatic vehicle tyre according to the features of Claim 2,
wherein each of the two web flanks (16, 17), in the radially inner region of extent of the height of extent hᵢ, where hᵢ ≤ 0.2 h, is additionally formed with a' rounded transition to the channel base (14).

4. Pneumatic vehicle tyre according to the features of one or more of the preceding claims,
wherein the web height h is configured such that 0.5 P_{T} ≤ h ≤ (P_{T} - 1 mm), wherein P_{T} denotes the maximum profile depth in the transverse channels (9) measured in the radial direction R.

5. Pneumatic vehicle tyre according to the features of one or more of the preceding claims,
wherein the web (12) is, at its narrowest point, formed with a width dₘᵢₙ of 1 mm ≤ dₘᵢₙ ≤ 3 mm.

6. Pneumatic vehicle tyre according to the features of one or more of the preceding claims,
wherein the transverse channel (9) is formed with a maximum width b of 0.8 mm < b ≤ 6 mm.

7. Pneumatic vehicle tyre according to the features of one or more of the preceding claims,
wherein the web (12) is formed with a spacing a to the nearest circumferential channel (6, 7) of 0 mm ≤ a ≤ 2 mm.

8. Pneumatic vehicle tyre according to the features of one or more of the preceding claims,
wherein the transverse channel (9) is a transverse channel (9) which separates two profile block elements (8) of a profile block row (2) and in which, in the region of the two ends of extent thereof, said region being formed within the ground contact patch width T_{A} of the tyre, there is formed a web (12) of said type which connects the two profile block elements (8).

9. Pneumatic vehicle tyre according to the features of Claim 8,
wherein the transverse channel (9) is formed with a smaller depth in the region of extent between the two webs (12) than outside said region of extent.

## Revendications

1. Bandage pneumatique pour roue de véhicule, notamment de voitures automobiles, présentant
un profil de bande de roulement doté de bandes profilées (1, 2, 3, 4, 5), par exemple des rangées de blocs profilés ou des nervures périphériques, débordant radialement et s'étendant sur la périphérie du bandage pneumatique pour roue de véhicule, séparées les unes des autres dans la direction axiale A par une rainure périphérique (6, 7, 10, 11) qui s'étend sur la périphérie du bandage pneumatique pour roue de véhicule,
au moins une bande profilée (2) de largeur b mesurée dans la direction axiale A à l'intérieur de la largeur T_{A} d'appui au sol, est formée des éléments (8) de bande profilée qui sont disposés l'un derrière l'autre dans la direction périphérique U du bandage pneumatique, débordés radialement et séparés les uns des autres respectivement par une rainure transversale (9),
la rainure transversale (9) débouchant au moins dans une rainure périphérique (6, 7),
au moins une nervure (12) en relief étant formée dans la rainure transversale (9) dans la direction radiale R, s'étendant depuis le fond (14) de la rainure transversale (9) jusqu'à une distance radiale h₂ > 0 de la surface d'enveloppe du profil de la bande de roulement qui forme la surface (13) de contact avec le sol,
la nervure s'étendant dans la direction périphérique U et reliant l'un à l'autre les deux éléments (8) de bande de roulement séparés l'un de l'autre par la rainure transversale (9),
la nervure (12) étant limitée vers l'extérieur dans la direction radiale R par une surface (15) de nervure orientée radialement vers l'extérieur et dans les deux directions d'extension de la rainure transversale (9), par un flanc (16, 17) de nervure qui s'étend dans la direction radiale R depuis le fond (14) de la rainure jusqu'à cette surface (15) de nervure et s'étendant dans la direction périphérique U depuis l'élément (8) de bande de roulement jusqu'à l'élément (8) de bande de roulement suivant,
tandis qu'en projection radiale sur la nervure (12), les deux flancs (16, 17) de nervure sont configurés avec d'un élément (8) de bande profilée à un autre élément (8) de bande profilée un contour doté d'une courbure formée en direction du côté non tourné vers la nervure (12) jusqu'au flanc (16, 17) concerné et avec une transition tangentielle vers le flanc (18, 19) de l'élément (8) de bande profilée concerné orienté vers la rainure transversale (9) et formant la paroi de la rainure,
**caractérisé en ce que**
les deux flancs (16, 17) de nervure sont configurés dans leur plan de coupe perpendiculaire à la direction radiale R avec d'un élément (8) de bande profilée à un autre élément (8) de bande profilée un contour doté d'une courbure formée en direction du côté non tourné vers la nervure (12) jusqu'au flanc (16, 17) concerné et avec une transition tangentielle vers le flanc (18, 19) de l'élément (8) de bande profilée concerné orienté vers la rainure transversale (9) et formant la paroi de la rainure, la courbure du contour augmentant de manière constante radialement vers l'intérieur dans les différents plans de coupe le long de l'extension radiale depuis la surface (16, 17) de la nervure.

2. Bandage pneumatique pour roue de véhicule selon les caractéristiques de la revendication 1, dans lequel chacun des deux flancs (16, 17) de nervure forme au moins dans la plage d'extension radialement extérieure de la hauteur d'extension hₐ une surface de segment d'enveloppe d'un tronc de cône dont l'axe KA est disposé sur le côté du flanc (16, 17) de nervure non tourné vers la nervure (12) et est orienté avec une composante d'orientation principale dans la direction radiale R, la hauteur d'extension hₐ par rapport à la hauteur totale d'extension h de la nervure (12), mesurée dans la direction radiale R, valant en particulier hₐ ≤ 0,8 h.

3. Bandage pneumatique pour roue de véhicule selon les caractéristiques de la revendication 2, dans lequel chacun des deux flancs (16, 17) de nervure est configuré dans la plage radialement intérieure de la hauteur d'extension hᵢ, avec hᵢ ≤ 0,2 h et de plus avec une transition arrondie vers le fond (14) de la rainure.

4. Bandage pneumatique pour roue de véhicule selon les caractéristiques d'une ou plusieurs des revendications précédentes, dans lequel la hauteur h de rainure vérifie la relation 0,5 P_{T} ≤ h ≤ (P_{T} - 1 mm), P_{T} étant la profondeur maximale du profilé mesurée dans la direction radiale R de la rainure transversale (9).

5. Bandage pneumatique pour roue de véhicule selon les caractéristiques d'une ou plusieurs des revendications précédentes, dans lequel à son emplacement le plus étroit, la nervure (12) est configurée avec une largeur dₘᵢₙ pour laquelle 1 mm ≤ dₘᵢₙ ≤ 3 mm.

6. Bandage pneumatique pour roue de véhicule selon les caractéristiques d'une ou plusieurs des revendications précédentes, dans lequel la rainure transversale (9) présente une largeur maximale b avec 0,8 mm < b ≤ 6 mm.

7. Bandage pneumatique pour roue de véhicule selon les caractéristiques d'une ou plusieurs des revendications précédentes, dans lequel la rainure (12) est configurée avec une distance a par rapport à la rainure périphérique (6, 7) la plus proche qui vérifie 0 mm ≤ a ≤ 2 mm.

8. Bandage pneumatique pour roue de véhicule selon les caractéristiques d'une ou plusieurs des revendications précédentes, dans lequel la rainure transversale (9) est une rainure transversale (9) qui sépare deux éléments (8) de bloc profilé d'une rangée (2) de blocs profilés et dans laquelle une telle nervure (12) qui relie les deux éléments (8) de bloc profilé est formée au niveau des deux extrémités de son extension à l'intérieur de la largeur (T_{A}) d'appui au sol du bandage de roue.

9. Bandage pneumatique pour roue de véhicule selon les caractéristiques de la revendication 8, dans lequel la rainure transversale (9) présente une plus petite largeur dans la plage de son extension comprise entre les deux nervures (12) qu'à l'extérieur.
